# EUROPEAN PATENT SPECIFICATION

(11) **EP 1 601 274 B1**
(45) Date of publication and mention of the grant of the patent: **30.04.2008**
(21) Application number: 04719273.7
(22) Date of filing: 10.03.2004
(51) Int. Cl.: A47K 7/03, G09B 19/00

(54) **CHILD'S CLEANSING SYSTEM**
WASCHSYSTEM FÜR KINDER
SYSTEME NETTOYANT POUR ENFANT

(30) Priority: 10.03.2003 US 453167 P
(43) Date of publication of application: 07.12.2005
(73) Proprietor: THE PROCTER & GAMBLE COMPANY, Cincinnati, Ohio 45202 (US)
(72) Inventor: SANCHEZ, Liza, Marie, Loveland, Ohio 45140 (US); SCHWARTZ, Krista, Rijn, Cincinnati, Ohio 45211 (US)
(74) Representative: Kremer, Véronique Marie Joséphine
(86) International application number: PCT/US2004/007372
(87) International publication number: WO 2004/080258

(56) References cited:
- US-A- 5 725 382
- US-A- 5 839 842

## Description

### FIELD OF INVENTION

The instant invention is directed to an article of commerce comprising, a container, one or more disposable cleaning implements, and set of visual prompts in association with the article. The set of visual prompts are of a form which are capable of being understood and followed by a child when the child is incapable of reading. A method for teaching a child who is Incapable of reading to clean themselves is also provided.

### BACKGROUND OF THE INVENTION

During bathing a caregiver will typically be present to clean not only the child, but also provide instruction on how to bath or wash and use various personal care products. The age at which a child will begin bathing itself is dependent upon many factors, some of which are psychological, some physiological, and some unique to each individual child. Typically, this will be prior to the child learning to read.

This presents a unique problem as, unlike adults, children beginning to bathe themselves are typically unable to read the instructions on the personal care products. This means constant intervention by the caregiver instructing the child in how and where to use any particular personal care product. A change in personal care product to one a child is unfamiliar with requires additional instruction and could possibly lead to regression back to where the caregiver alone is washing the child.

This inability of the child to read the instructions can lead to many problems. One such problem is incorrect use of the product, for example, the child using bar soap to wash their hair or washing their body with shampoo, etc. Another problem is a child using too much product. What caregiver has not experienced a well meaning child using a too much, if not all, of a bottle of bubble bath in a single bath because the child wanted more bubblest

US 5,725,382 discloses a self contained interactive toilet training kit for children and caregivers.

Additionally, without constant supervision The child in question may simply fall to adequately or completely clean itself. It is not unforeseeable that a child may fail to wash their hair, clean behind their ears or the like, even though they have been specifically instructed to. This failure to clean thoroughly means that the caregiver needs to, in effect, wash the child again just to be sure the child is clean, even though the child may have washed a substantial portion of its body.

US 5,839,842 discloses a cleansing system including a toilet bar and sponge supported within a porous pouch. The features "container" and cleaning implement of claim 1 are known from this document.

Furthemore, a child may at this age, desire privacy and independence. This may be indicated when the child closes a bathroom door, when in the past an open door was never a concern. If the caregiver needs to assist the child, there can be a conflict of emotion for the child that may be obstructive to the bathing process.

It can now be appreciated that bathing involves many aspects for both the child and the caregiver, especially for the child incapable of reading. Some of these aspects affect children differently, or may not even be a factor for a particular child. It is this uniqueness of each individual child that presents a major challenge for both the child and the caregiver. If any of these aspects are unsuccessful, the child's progress in learning how to bathe or clean properly can be unnecessarily delayed due to numerous failures and frustrations.

The problem remains that there is no bathing or cleaning product, products or system available for a child incapable of reading written prompts, which can be easily handled and the method of utilizing easily understood, by the child.

### SUMMARY OF THE INVENTION

A first aspect of the present invention provides, an article of commerce according to claim 1.

Another aspect, the present invention provides, a method for teaching a child who is incapable of reading to clean themselves, according to claim 8.

All percentages, ratios and proportions are by weight, and all temperatures are in degrees Celsius (°C), unless otherwise specified. All measurements are in S1 units unless otherwise specified.

### BRIEF DESCRIPTION OF THE DRA WINGS

The above-mentioned and other features and objects of this invention and the manner of attaining them will become more apparent, and the invention itself will be better understood by reference to the following description of the invention taken in conjunction with the accompanying drawings, wherein:
Figure 1 illustrates one embodiment of a container.
Figure 2 illustrates one embodiment of a disposable cleaning implement.
Figure 3 illustrates one embodiment of a disposable nonwoven child's cleansing mitt.
Figure 4 illustrates another alternative embodiment of a disposable nonwoven child's cleansing mitt.
Figure 5 illustrates one embodiment of a set of visual prompts.
Figure 6 illustrates an alternative embodiment of a set of visual prompts.
Figure 7 Illustrates one embodiment of a disposable nonwoven child's cleansing mitt having a portion of the set of visual prompts of Figure 6.
Figure 8 illustrates another alternative embodiment of a set of visual prompts.
Figure 9 illustrates another alternative embodiment of a set of visual prompts.

### DETAILED DESCRIPTION

The instant articles, and methods of the present invention are suitable for use by children in personal cleansing. Due to the ease and simple method of use very young children are able to clean themselves, to an extent independently, with the instant invention.

### DEFINITIONS

As used herein the abbreviation "gsm" means "grams per square meter".

As used herein, "disposable" is used in its ordinary sense to mean an article that is disposed or discarded after a limited number of usage events, preferably about 2 or less, and more preferably about I entire usage events.

The term "releasably carrying" means that a composition is contained in and/or on a disposable cleaning implement and is readily releasable from the disposable cleaning implement by application of water and/or application of some force to the disposable cleaning implement, for example, wringing the cleanser, wiping a child, or immersing part or all of the disposable cleaning implement in water.

As used herein, the term "incapable of reading" means that the child is unable to correctly understand, comprehend and follow prompts written in a language that the child can speak without assistance of a third party. The ability of a child to recognize letters and/or read one or two isolated words still means that the child is "incapable of reading" since they are unable to understand, comprehend and follow such written prompts, without assistance. However, this definition of "incapable of reading" does not exclude the child from being able to understand, comprehend and follow visual prompts which are presented in the form of drawings, symbols, gestures, cartoons and the like.

As used herein a "third party" means a person other than the child, such as, an adult or a child who is able to provide sufficient assistance to the child to enable them to correctly understand, comprehend and follow written prompts.

As used herein, the term "comprising" means that the various components, ingredients, or steps, can be conjointly employed in practicing the present invention. Accordingly, the term "comprising" is open-ended and encompasses the more restrictive terms "consisting essentially of" and "consisting of." Other terms may be defined as they are discussed in greater detail herein.

### Article of Commerce

In one embodiment of the present invention an article of commerce is provided. The article of commerce of the present invention typically comprises (a) a container as described herein, (b) at least one disposable cleaning implement as described herein, and (c) a set of visual prompts also as described herein.

### (a) Container

The article of commerce of the present invention comprises a container. The container may be any suitable container which is capable of removably holding at least one disposable cleaning implement. The container may be made of any suitable material, such as but not limited to: natural materials, such as but not limited to, canvas, hemp, cotton, paper, cardboard, and the like; plastics, such as but not limited to, acrylate, natural and synthetic rubbers, polyurethanes, polyvinyl alcohol, polyethylvinyl alcohol, polyesters, such as but not limited to polyethylene terepthalate (PET), polystyrenes, polyolefins, such as but not limited to, polypropylene, high density polyethylene, and combinations of plastics, such as but not limited to laminates; metals; laminates, such as but not limited to canvas, paper or cardboard, metal foil, polyvinyl alcohol, polyethylvinyl alcohol polyethylene and/or paper; wood; and combinations thereof. The various parts of the container body may be made of the same or different material. The containers may also be made of mixtures of materials.

The container of the present invention may be rigid or it may be semi-rigid. Typically, the container will have a portion for storage of the disposable cleaning implements. The size of the storage portion will depend upon the many factors, such as but not limited to, the size of the disposable cleaning implements, the number of disposable cleaning implements initially present in the container, ease of use by a child, etc. This storage portion may be accessed in any suitable fashion through an opening, or orifice of a size appropriate for the size of the disposable cleaning implements.

The opening or orifice of the container may be covered by, such as but not limited to: a lid; a resealable opening, such as but not limited to, resealable labels, zipper, tongue and grove fasteners such as "ZIP-LOCK" type fasteners, hook and loop fasteners such as VELCRO®, buttons, snaps, hooks, and the like.

Containers useful in the present article of commerce include but are not limited, PET tubs, flow wrap pouches, precut sachets for individually packed disposable cleaning implements, and other packaging known in the art as suitable for nonwoven articles releasably carrying a composition.

In one embodiment of the present invention the disposable cleaning implement of the present invention are stored in the containers which are water tight, water proof, water resistant, or the like, to reduce the possibility of accidental contact of with water of any of the disposable cleaning implements while in the container. Additionally, the container can also be manufactured to facilitate an individual, rather than several, disposable cleaning implement removal.

In one optional embodiment of the present invention the containers may also comprise hooks, suction cups or the like, which enable the container to be retained on, for example, the side of a bath tub, over a bathroom fixture, such as a shower head, faucet and the like, or even directly attached to the bathroom wall.

The containers can be manufactured by, for example, a vacuum molding process injection molding process, or any suitable process.

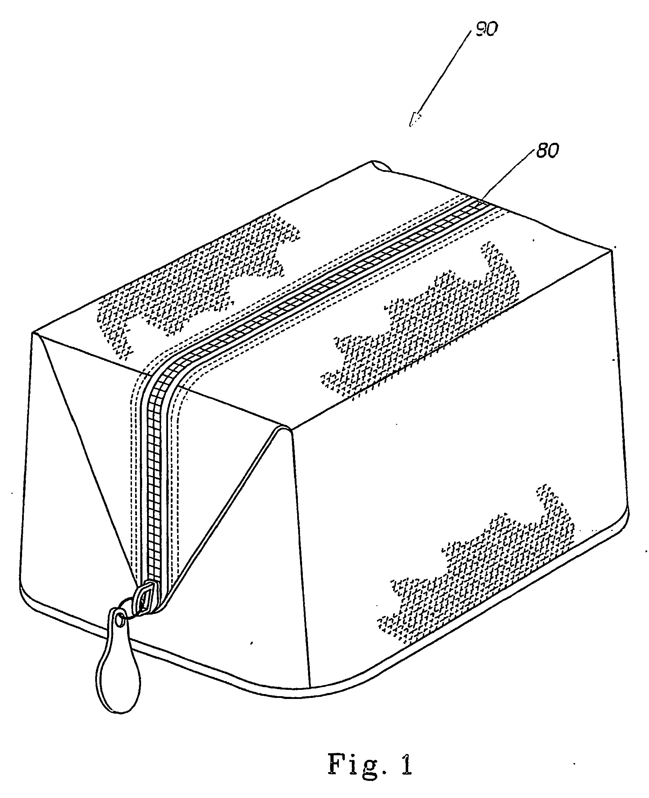

Figure 1 is an illustration of one exemplary container 90. The interior portion of container 90 housing one or more disposable cleaning implements is accessed via the zipper opening 80. In an alternative embodiment the container may be in the shape of a character, especially if the character is one present in the set of visual prompts. Characters and visual prompts are explained and described in more detail herein.

Additional information on containers, as well as additional option components for containers, including but not limited to: container bodies; lids; containers features, such as but not limited to, attachments of lids, hinges, zippers, securing means; and the like, can be found in U.S. Patent Nos. Des 451,279 issued on December 4, 2001, to Chin; Des 437,686 issued on February 20, 2001, to Balzar; Des 443,508 issued on June 12, 2001, to Braaten; Des 443,451 issued on June 12, 2001, to Buck; Des 421,901 issued on March 28, 2000, to Hill; Des 421,902 issued on March 28, 2000, to Hill; Des 416,794 issued on November 23, 1999, to Cormack; Des 414,637 issued on October 5, 1999, to Amundson; Des 445,329 issued on July 24, 2001, to Zethoff; 3,982,659 issued on September 26, 1976, to Ross; 3,967,756 issued on July 6, 1976, to Barish; 3,986,479, issued on October 19, 1976, to Boedecker; 3,994,417 issued on November 30, 1976, to Boedecker; 6,269,970 issued on August 7, 2001, to Huang; 5,785,179 issued on July 28, 1998, to Buczwinski; 5,366,104 issued on November 22, 1994, to Armstrong; 5,322,178 issued on June 21, 1994, to Foos; 5,050,737 issued on September 24, 1991, to Josyln; 4,971,220 issued on November 20, 1990, to Kaufman; 6,296,144 issued on October 2, 2001, to Tanaka; 6,315,114 issued on November 13, 2001, to Keck; 4,840,270 issued on June 20, 1989, to Caputo; 4,471,881 issued on September 18, 1984, to Foster; 5,647,506 issued on July 15, 1997, to Julius; 6,401,968 issued on June 11, 2002, to Huang; 6,269,969 issued on August 7, 2001, to Huang; 6,412,634 issued on July 2, 2002, to Telesca; 5,791,465 issued on August 11, 1998, to Niki; 6,092,690 issued on July 25. 2000, to Bitowft; and 6,092,690 issued on July 25, 2000, to Bitowft; U.S. Patent Application Publication No. 2002/0064323 published on May 30, 2002, inventor Chin; and WO 00/27268 published on May 18, 2000, and assigned to The Procter & Gamble Co.; WO 02/14172 published on February 21, 2002, and assigned to The Procter & Gamble Co.; and WO 99/55213 published on November 4, 1999, and assigned to The Procter & Gamble Co.

### (b) Disposable Cleaning implement

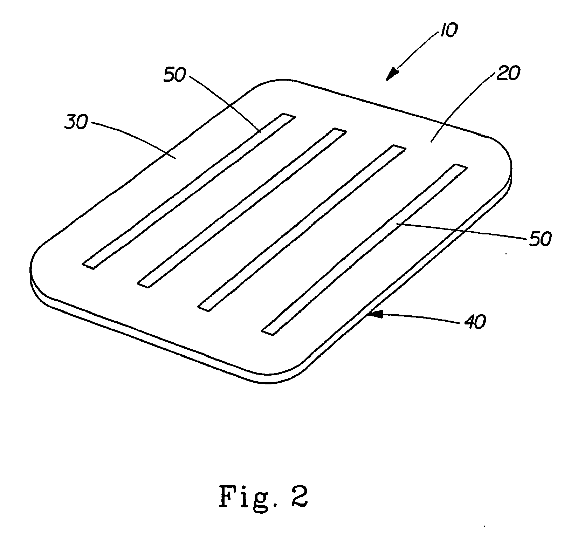

Referring to Figure 2, there is illustrated one possible embodiment of a disposable cleaning implement 10, in accordance with the present invention. The disposable cleaning implement 10 comprises a nonwoven sheet member, having a first surface 30, and an opposing second surface 40.

The disposable cleaning implement 10 also comprises a personal care composition 50. The disposable cleaning implement 10 is releasably carrying the personal care composition 50 on its first surface 30. In one embodiment of the present invention the personal care composition may be present on a part of the disposable cleaning implement 10, such as but not limited to, the first surface 30 in the form of stripes, spots, geometric patterns, non-geometric patterns or in a random distribution. In an alternative embodiment, the personal care composition 50 may be present on the entire first surface 30 of the disposable cleaning implement 10. In another an alternative embodiment, not shown, the personal care composition may be present in the interior of the disposable cleaning implement, and/or the first surface of the disposable cleaning implement.

It is to be understood that while in Figure 2 the first surface 30 of the disposable cleaning implement 10 is releasably carrying the personal care composition 50 in other embodiments of the present invention the opposing second surface 40 of the disposable cleaning implement 10 may be releasably carrying the personal care composition. There is no restriction as to which surface of the disposable cleaning implement is releasably carrying the personal care composition. It is even possible that all of the surfaces of the disposable cleaning implement be releasably carrying the personal care composition. Furthermore, the personal care composition may be carried on any surface, and/or interior of a disposable cleaning implement as long as the disposable cleaning implement is releasably carrying it.

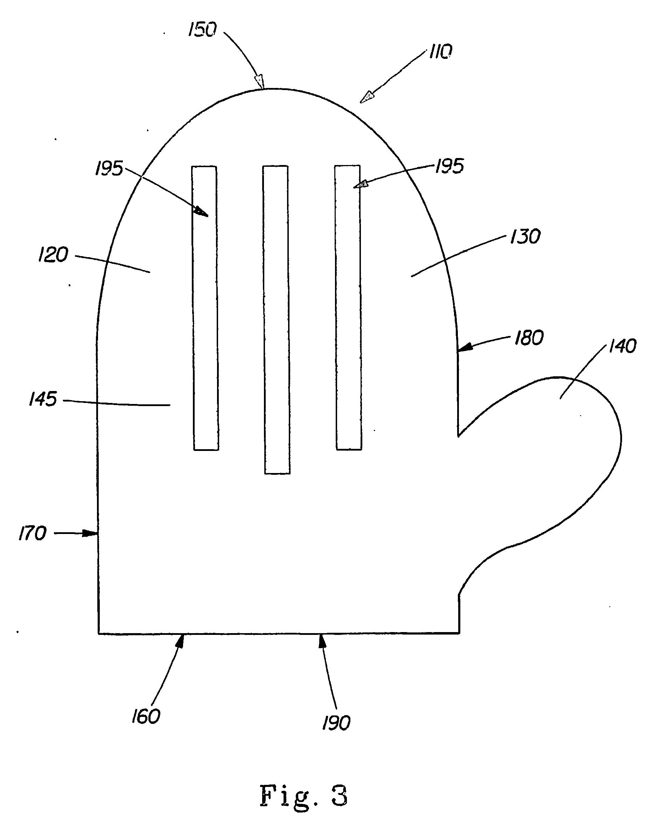

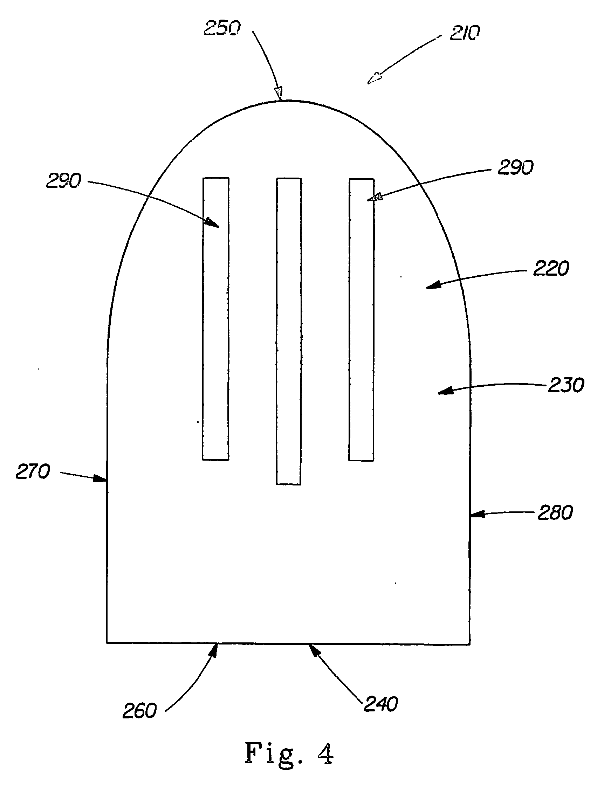

In one optional embodiment the disposable cleaning implement is a child's cleansing mitt, such as a disposable nonwoven child's cleansing mitt, and comprises first and second complementary nonwoven sheet members. Nonlimiting examples of such child's cleansing mitts may be found in Figures 3 and 4.

In Figure 3, there is illustrated one possible embodiment of a nonwoven child's cleansing mitt 110, in accordance with the present invention. The mitt 110 comprises a first nonwoven sheet member 120, which has an exterior surface 130, an interior surface, a top edge 150, a bottom edge 160, a first side edge 170 and a second side edge 180. The first nonwoven sheet member 120, together with a substantially complementary second nonwoven sheet member, which are in an overlying relationship, define an interior volume which is accessed by the user's hand (i.e. a child) via opening 190.

The interior volume of mitt 110 is divided into two parts, one part for the child's thumb 140 and one part for the remainder of the child's hand 145.

The mitt 110 also comprises a personal care composition 195. The first nonwoven sheet member 120 is releasably carrying the personal care composition 195 on its exterior surface 130. In one embodiment of the present invention the personal care composition may be present on a part of the first nonwoven sheet member 120, such as, but not limited to, the exterior surface 130 in the form of stripes, spots, geometric patterns, non-geometric patterns or in a random distribution. In an alternative embodiment, the personal care composition 195 may be present on the entire exterior surface 130 of the first nonwoven sheet member 120. In another an alternative embodiment, not shown, the personal care composition may be present in the interior of the first nonwoven sheet member, and/or the exterior surface of the nonwoven sheet member.

It is to be understood that while in Figure 3 the exterior surface 130 of the first nonwoven sheet member 120 is releasably carrying the personal care composition 195 in other embodiments of the present invention the second nonwoven sheet member may be releasably carrying the personal care composition. There is no restriction as to which of the first nonwoven sheet member and the second nonwoven sheet member is releasably carrying the personal care composition. It is even possible that both the first and second nonwoven sheet members be releasably carrying the personal care composition. Furthermore, the personal care composition may be carried on the exterior surface, interior, and/or interior surface of a nonwoven member as long as the nonwoven member is releasably carrying it.

Referring to Figure 4, there is illustrated another possible embodiment of a mitt 210, in accordance with the present invention. The mitt 210 comprises a first nonwoven sheet member 220, which has an exterior surface 230, an interior surface, a top edge 250, a bottom edge 260, a first side edge 270 and a second side edge 280. The first nonwoven sheet member 220, together with a complementary second nonwoven sheet member, which are in an overlying relationship, define an interior volume which is accessed by the user's hand via opening 240.

The mitt 210 also comprises a personal care composition 290. The first nonwoven sheet member 220 is releasably carrying the personal care composition 290 on its exterior surface 230. In one embodiment of the present invention the personal care composition may be present on a part of the first nonwoven sheet member 220, such as but not limited to, the exterior surface 230 in the form of stripes, spots, geometric patterns, non-geometric patterns or in a random distribution. In an alternative embodiment, the personal care composition 290 may be present on the entire exterior surface 230 of the first nonwoven sheet member 220. In another an alternative embodiment, not shown, the personal care composition may be present in the interior of the first nonwoven sheet member, and/or the exterior surface of the nonwoven sheet member.

It is to be understood that while in Figure 4 the exterior surface 230 of the first nonwoven sheet member 220 is releasably carrying the personal care composition 290 in other embodiments of the present invention the second nonwoven sheet member may be releasably carrying the personal care composition. There is no restriction as to which of the first nonwoven sheet member and the second nonwoven sheet member is releasably carrying the personal care composition. It is even possible that both the first and second nonwoven sheet members be releasably carrying the personal care composition. Furthermore, the personal care composition may be carried on the exterior surface, interior, and/or interior surface of a nonwoven member as long as the nonwoven member is releasably carrying it.

In one option of the present invention the disposable cleaning implement of the present invention may comprise decorative matter on its surface. This decorative matter may be of any size, shape, arrangement, color etc. It may be designs, symbols, characters, indicia and the like. In one embodiment of the present invention the decorative matter may be in the form of a set, or part of a set, of visual prompts for the child on how to use the disposable cleaning implement. The set of visual prompts are explained in more detail herein.

In one optional embodiment of the present invention the disposable cleaning implement of the present invention may comprise an attachment means to snugly attach the disposable cleaning implement to the child's hand. The attachment means may be any suitable means for permitting a removable attachment of the disposable cleaning implement of the present invention to a child's hand. Suitable adjustment means, include but are not limited to, hook and loop fasteners such as Velcro® and the like, elastic members, buttons, fasteners, tabs, resealable tape, belts, clips, refastenable adhesives, and combinations thereof.

In one optional embodiment of the present invention when the disposable cleaning implement is a child's cleansing mitt, it may comprise an adjustment means to snugly accommodate different child hand sizes. The adjustment means may be any means suitable for permitting a variation in the size of an interiorly defined volume, to snugly accommodate different child hand sizes. Suitable adjustment mechanism, include but are not limited to, include, hook and loop fasteners such as Velcro® and the like, gussets, cinches, elastic members, elastic strands, buttons, fasteners, tabs, resealable tape, belts, clips, refastenable adhesives, and combinations thereof.

In an alternative embodiment of the present invention the material, or a portion of the material, which comprises the disposable cleaning implement is selected such that it, will adhere, cling or stick to the child's hand prior to and during use. For example, the mitt 210 of Figure 4, may optionally comprise in its interior surface material that will adhere, stick or cling to the child's hand prior to and during use. This optional adhesion may be achieved in a variety of ways, including but not limited to, adhesive, friction, electrostatic attraction, conformation or constriction of the disposable cleaning implement or a portion thereof, to the shape of the child's hand when wet, fluid between the child's hand and the material and combinations thereof. Suitable material for this optional adhesion, include but do not limited to, adhesive, polyolefin films such as films comprising polyethylene and/or polypropylene, and combinations thereof.

Additional information on materials which are suitable for use as the disposable cleaning implements, child's cleansing mitt, and/or nonwoven sheet members of the present invention can be found in the following patents: U.S. Patent 3,862,472 issued Jan 28, 1975; U.S. Patent 3,982,302 issued Sept. 28. 1976; U.S. Patent 4,004,323 issued Jan. 25, 1977; U.S. Patent 4,057,669 issued Nov. 8. 1977; U.S. Patent 4,097,965 issued July 4, 1978; U.S. Patent 4,176,427 issued Dec. 4, 1979; U.S. Patent 4,130,915 issued Dec. 26, 1978; U.S. Patent 4,135,024 issued Jan. 16, 1979; U.S. Patent 4,189,896 issued Feb. 26, 1980; U.S. Patent 4,207,367 issued June 10, 1980; U.S. Patent 4,296,161 issued Oct. 20, 1981; U.S. Patent 4,309,469 issued Jan 25, 1982; U.S. Patent 4,682,942 issued July 28, 1987; and U.S. Patents 4,637,859; 5,223,096; 5,240,562; 5,556,509; and 5,580.423.

Additional information on suitable child's cleansing mitts and/or nonwoven sheet members may be found in copending U.S. Provisional Patent Applications filed on March 10, 2003, entitled "Disposable Nonwoven Cleansing Mitt" in the name of Dobrin et al. published as WO 2004/080257, (P&G Docket Number 9181P); and entitled "Disposable Nonwoven Cleansing Mitt" in the name of Benjamin et al. published as WO 2004/080256 (P&G Docket Number 9180PQ).

The manufacture of disposable cleaning implements, child's cleansing mitts, nonwoven sheet member and components thereof, such as, nonwoven sheet substrate per se forms no part of this invention.

The material of which disposable cleaning implements are made from should be strong enough to resist tearing during normal use, yet still provide softness to the child's tender skin. Additionally, the material should be water insoluble, or at least capable of retaining its form for the duration of the child's cleansing experience.

In one embodiment of the instant invention the disposable cleaning implements comprise a mixture of natural fibers and synthetic fibers. In alternative embodiments of the present invention the disposable cleaning implements may wholly comprise natural fibers, while in other alternative embodiments still may wholly comprise synthetic fiber8.

In one embodiment of the present invention when the disposable cleaning implement comprises two nonwoven sheet members each nonwoven sheet member is made of material which is different to that of the other nonwoven sheet member. In another alternative embodiment of the present invention when the disposable cleaning implement comprises two nonwoven sheet members the two nonwoven sheet members are made of the same material.

Suitable natural fibers include but are not limited to cellulosic fibers, such as wood pulp fibers, cotton, and rayon. Suitable synthetic fibers include fibers commonly used in textiles, including but not limited to, polyester and polypropylene fibers polyethylene, polyether, PET, and combinations thereof. It is also possible to use bicomponent polymers, or simply bico or sheath polymers. These bico polymers can be used as a component fiber of the nonwoven sheet member, and/or they may be present to act as a binder for the other fibers present in the nonwoven material. Suitable nonwovens with good softness include, but are not limited to, nonwoven materials comprising polypropylene, polyethylene, cellulose, rayon, polyether, PET, bicomponent polymers, and combinations thereof.

Various forming methods can be used to form the disposable cleaning implements, and/or the nonwoven sheet members. For instance, the disposable cleaning implements can be made by nonwoven dry forming techniques, such as air-laying, or alternatively by wet laying, such as on a papermaking machine, of a continuous web out of which the cleansers are made. Other nonwoven manufacturing techniques, including but not limited to, techniques such as adhesive bonding, melt blown, spunbonded, carding, needle punched, hydroentanglement and lamination methods may also be used.

The disposable cleaning implements of the present invention may be subjected to various treatments, such as but not limited to, physical treatment, such as zone activation, ring rolling SELFing and the like; chemical treatment, such as rendering part or all of the disposable cleaning implements hydrophobic, and/or hydrophilic, and the like; thermal treatment, such as softening of fibers by heating, thermal bonding and the like; and combinations thereof.

It is also within the scope of the present invention that the disposable cleaning implements, and nonwoven sheet members when present, may comprise laminates of two or more substrates or webs. Commercially available laminates, or purpose built ones would be within the scope of the present invention. Additionally, the disposable cleaning implements, and nonwoven sheet members, when present, may be flat or textured. The formation of textured disposable cleaning implements, and nonwoven sheet members, when present, and laminates forms no part of this invention. The following discussion is for convenience of formulation, but is not intended to limit the type of disposable cleaning implements used herein.

In one embodiment of the present invention the surface of disposable cleaning implements is essentially flat. In another embodiment of the present invention the surface of the cleanser may optionally contain raised and/or lowered portions. These can be in the form of logos, indicia, trademarks, geometric patterns, images of the surfaces that the child's cleansing mitt is intended to clean (i.e. child's body, face, etc.,). They may be randomly arranged on the surface of the disposable cleaning implements or be in a repetitive pattern of some form. They may be on one or both of the sides or surfaces of the disposable cleaning implements. In one embodiment one of the nonwoven sheet members contains a repetitive pattern or alternating raised and lowered portions of the substrate. This variation in or on the surface of one side of the disposable cleaning implement may be included to, for example, convey to the child or a caregiver information on the disposable cleaning implements intended use, how a child is to place the child's cleansing mitt on the child's hand, which brand or type of disposable cleaning implement they are using is or even to aid in cleaning of the child.

In another embodiment of the present invention the disposable cleaning implements is biodegradable. For example the cleanser could be made from a biodegradable material, such as a polyesteramide.

In one optional embodiment the disposable cleaning implement is a child's cleansing mitt, and comprises first and second substantially complementary nonwoven sheet members. The first and second complementary nonwoven sheet members may be joined or bonded together in any suitable fashion. For example, the first and second nonwoven sheet members may be joined by ultrasonically bonding, sewing, adhesively, mechanically bonding, fusion bonding, heat or thermal bonding and combinations thereof. The first and second nonwoven sheet members are joined at their respective first, second and top edges. The bottom edges may be either totally unbonded or partially bonded. Any such partial bond will not restrict a child from wearing the mitt, and may aid in securing the mitt to the child's hand.

The disposable cleaning implement can be manufactured in various sizes. The disposable cleaning implement will typically have dimensions which make it suitable for use by a child. For example, the child's cleansing mitt 110 of Figure 3 may have a length, as measured between bottom end 160 and top end 150, of from about 100 mm to about 200mm and a total width between sides 170 and 180 of from about 80 mm to about 125 mm. The opening to access the interior portion of the child's cleansing mitt is from about 20 mm to about 100 mm.

### Personal Care Compositions

The personal care compositions releasably carried by the disposable cleaning implement of the present invention may comprise a variety of components such as are conventionally used in personal care compositions. These optional components should be suitable for application to a child's skin and hair; that is, when incorporated into the article they are suitable for use in contact with human skin without undue toxicity, incompatibility, irritation, instability, allergic response, and the like, within the scope of sound medical or formulator's judgment.

In one embodiment of the present invention the personal care compositions are in the form of a paste, or a dry solid. While personal care compositions comprising more than about 50% by weight of the composition of a liquid carrier, such as water, are within the scope of the present invention, it is preferred that any disposable cleaning implement be mostly dry, more preferably dry to the touch, prior to contact with the washing environment, that is, until the child first immerses the disposable cleaning implement or otherwise contacts it with water. Typically, this translates into levels of liquid carrier, such as water, of less than or equal to about 10%, more preferably less than or equal to about 7% by weight of personal care composition.

In one alternative embodiment of the present invention the amount of personal care composition present in the disposable cleaning implement is preferably present in amounts from about 1 gsm to about 200 gsm, more preferably from about 10 gsm to about 175 gsm, even more preferably still from about 20 gsm to about 150 gsm. (Grams of personal care composition per square meter of nonwoven sheet member) Alternatively, each disposable cleaning implement may contain from about 1g to about 20g, more preferably from about 1g to about 15g of personal care composition per disposable cleaning implement.

### Surfactants

The personal care compositions used in the present invention may optionally contain one or more surfactant. Typically the optional surfactant, when present, is selected from the group consisting of anionic surfactants, amphoteric surfactants, nonionic surfactants, zwitterionic surfactants, cationic surfactants, and mixtures thereof.

The surfactants of the personal care compositions may be lathering or non-lathering surfactants. As used herein, "lathering surfactant" means a surfactant, which when combined with water and mechanically agitated generates a foam or lather. A "nonlathering surfactant" produces no such foam or lather under similar conditions. It is preferred, however, that the surfactants be lathering since increased lather is important to consumers as an indication of cleansing effectiveness.

Nonlimiting examples of surfactants useful in the compositions of the present invention are disclosed in McCutcheon's, Detergents and Emulsifiers, North American edition (1986), published by Allured Publishing Corporation; McCutcheon's, Functional Materials, North American Edition (1992); and U. S. Patent No. 3,929,678, to Laughlin et al., issued December 30, 1975.

Some nonlimiting examples of suitable surfactants include ammonium lauroyl sarcosinate, sodium trideceth sulfate, sodium lauroyl sarcosinate, ammonium laureth sulfate, sodium laureth sulfate, ammonium lauryl sulfate, sodium lauryl sulfate, ammonium cocoyl isethionate, sodium cocoyl isethionate, sodium lauroyl isethionate, sodium cetyl sulfate, sodium monolauryl phosphate, sodium cocoglyceryl ether sulfonate, sodium C₉-C₂₂ soap, amine oxides such as lauramine oxide and cocoamine oxide, decyl polyglucose, lauryl polyglucose, sucrose cocoate, C₁₂₋₁₄ glucosamides, sucrose laurate, fatty amines, di-fatty quaternary amines, tri-fatty quaternary amines, imidazolinium quaternary amines, PEG 80 Sorbitan laurate, PEG-150 distearate, sodium laureth-13 carboxylate, disodium lauroamphodiacetate, sodium lauroamphoacetate, cetyl dimethyl betaine, cocoamidopropyl betaine, cocoamidopropyl hydroxy sultaine, and combinations thereof.

Surfactant, when present, is typically employed in compositions at levels of preferably from about 0.01% to about 99%, more preferably from about 0.5% to about 97 %, and more preferably from about 1.0% to about 98%, by weight of the personal care composition.

### Adjunct Ingredients

The personal care compositions used in the present invention may optionally contain one or more adjunct ingredients.

The *CTFA Cosmetic Ingredient Handbook*, Second Edition (1992) describes a wide variety of nonlimiting cosmetic, neutraceutical, and pharmaceutical ingredients commonly used in the skin care industry, which are suitable for use as adjunct ingredients in the personal care compositions used in the present invention. Examples of these ingredient classes include, but are not limited to: enzymes, absorbents, aesthetic components, fragrances, pigments, colorings, colorants, essential oils, skin sensates, anti-acne agents (e.g., resorcinol, sulfur, salicylic acid, erythromycin, zinc, etc.), anti-caking agents, antifoaming agents, preservative, conditioners, hair conditioners, dye, antimicrobial agents (e.g., quaternium-15, methyl paraben, ethyl paraben, propyl paraben, DMDM hydantoin etc.), antioxidants, glycerin, binders, biological additives, buffering agents, bulking agents, chelating agents, chemical additives, solvents, cosmetic biocides, denaturants, external analgesics, film formers or materials, e.g., polymers, for aiding the film-forming properties and substantivity of the composition (e.g., copolymer of eicosene and vinyl pyrrolidone), humectants, opacifying agents, pH adjusters, process aids, reducing agents, sequestrants, skin-conditioning agents (humectants, including miscellaneous and occlusive), skin soothing and/or healing agents (e.g., panthenol and derivatives (e.g., ethyl panthenol), aloe vera, pantothenic acid and its derivatives, allantoin, bisabolol, and dipotassium glycyrrhizinate), skin treating agents, binders, thickeners, hydrocolloids, zeolites, and vitamins and derivatives thereof (e.g., tocopherol, tocopherol acetate, beta carotene, retinoic acid, retinol, retinoids, retinyl palmitate, niacin, niacinamide, and the like). The personal cleansing compositions releasably contained by the disposable cleaning implement may include carrier components such as are known in the art, for example water, alcohols, polyols, and the like. Such carriers can include one or more compatible liquid or solid filler diluents or vehicles which are suitable for application to skin or hair. Additionally, the adjunct ingredients can be applied to the nonwoven sheet member as a deposit separate from that of any optional surfactant deposited on the nonwoven sheet.

The adjunct ingredients useful herein can be categorized by their therapeutic or aesthetic benefit or their postulated mode of action. However, it is to be understood that the adjunct ingredients useful herein can in some instances provide more than one therapeutic or aesthetic benefit or operate via more than one mode of action. Therefore, classifications herein are made for the sake of convenience and are not intended to limit the component to that particular application or applications listed. Also, when applicable, the pharmaceutically-acceptable salts of the components are useful herein.

Adjunct ingredients, when present, are each typically employed in compositions at levels of from about 0.0001% to about 99.9%, preferably from about 0.001% to about 99%, and more preferably from about 0.01% to about 97%, by weight of the personal care composition.

In preparing the disposable cleaning implement of the present invention the personal care composition need to be releasably carried by the disposable cleaning implement, such as placed on one of the nonwoven sheet members. Techniques for combining the disposable cleaning implement or nonwoven sheet members with the personal care composition are well known in the art. Examples of common methods of combining the personal care composition with the disposable cleaning implement member may involve coating, immersing, dipping, printing, and/or spraying, a nonwoven sheet member with the personal care composition. The personal care composition of is added to the disposable cleaning implement at level sufficient to provide the desired benefits of the present invention. A convenient method of combining the personal care composition of the present invention with the disposable cleaning implement is for the personal care composition to be applied to a nonwoven sheet member while the nonwoven sheet member is a continuous web. The application could be in many forms, including one or more of, but not limited to coating, immersing, dipping, spraying, printing, extruding and the like. Once the personal care composition is applied the nonwoven sheet member is cut to the desired length to form the disposable cleaning implement and then packaged for sale. Alternatively, the personal care composition may be added to a nonwoven sheet member when the nonwoven sheet member is part of a formed child's cleansing mitt.

The personal care composition may be added to the disposable cleaning implement in any convenient fashion. For example, the personal care composition components could all be mixed together and then sprayed onto a nonwoven sheet member; each component could be deposited on a nonwoven sheet member separately; or half the components could be mixed together and then added to a nonwoven sheet member, with the remainder then being mixed together and then sprayed on to a nonwoven sheet member.

In one optional embodiment of the present invention the personal care composition is applied to a nonwoven sheet member, in the form of a paste prior to the assembly of the disposable cleaning implement. This optional embodiment is more preferably a "hot melt" composition. Hot melt composition have high viscosity at or around room temperature, and then melt (become substantially liquid) at higher temperatures. Such systems are advantageous during processing of a disposable, substantially dry (or dry to the touch) child's cleansing mitt since the composition can be applied (e.g., coated, sprayed, extruded) to the nonwoven sheet member at a low viscosity (e.g., a liquid) at higher than room temperature, and then as the composition cools down, it becomes a high viscosity paste or solid.

Once the personal care composition is applied to the disposable cleaning implement or nonwoven sheet member it may be further treated in any conventional manner, such as but not limited to, heating to remove excess water from the personal care composition.

### (c) Visual Prompts

The article of manufacture of the present invention further comprises a set of visual prompts in association with the article. As used herein, the phrase "in association with" means the visual prompts are either directly printed on the container itself, the disposable cleaning implement and/or presented in a different manner including, but not limited to, a brochure, print advertisement, electronic advertisement, and/or verbal communication, so as to communicate the set of prompts to the child using of the article of manufacture.

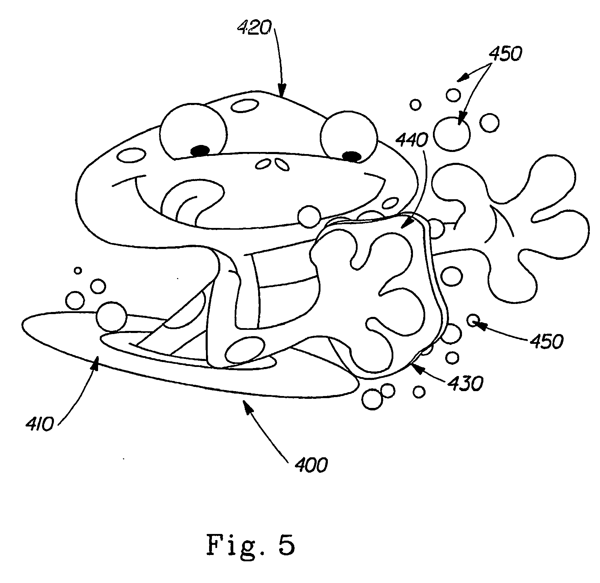

The set of visual prompts may be any visual communication suitable for communicating to a child incapable of reading how to use the article of commerce, more preferably the article of commerce when it contains one or more child's cleansing mitts. The set of visual prompts may include pictorial symbols and/or images, such as but not limited to, photographs, such as but not limited to: a photograph of a child using the disposable cleaning implement; drawings, such as a drawing of a child or an anthropomorphic image of an animal (See Figures 5-8) using the disposable cleaning implements; cartoons, such as but not limited to, well known cartoon characters, well known brand logos or the like, or characters specifically created to be associated with the article of commerce; symbols, such as but not limited to arrows, indications or motion or movement, and the like; and combinations thereof.

The set of visual prompts may be arranged in any manner as long as it communicates to a child incapable of reading how to use the article of manufacture. Typically this will be in the form of one or more pictorial images. The arrangement may include the set of visual prompts in, for example, a single image or picture, such as in a single image or a single cartoon. Figure 5 illustrates a single image 400 which includes a set of visual prompts. The visual prompts present in image 400 include an anthropomorphic animal 420, in this case a frog, who is in a body of water 410, holding a disposable cleaning implement 430 in his hand. It is preferred that the disposable cleaning implement illustrated in the set of visual prompts would be similar in appearance to any disposable cleaning implements present in the container. The image further illustrates that frog 420, is cleaning himself thereby generating suds and bubbles 450 using the disposable cleaning implement 430 by contacting parts of his body 440 with the disposable cleaning implements 430.

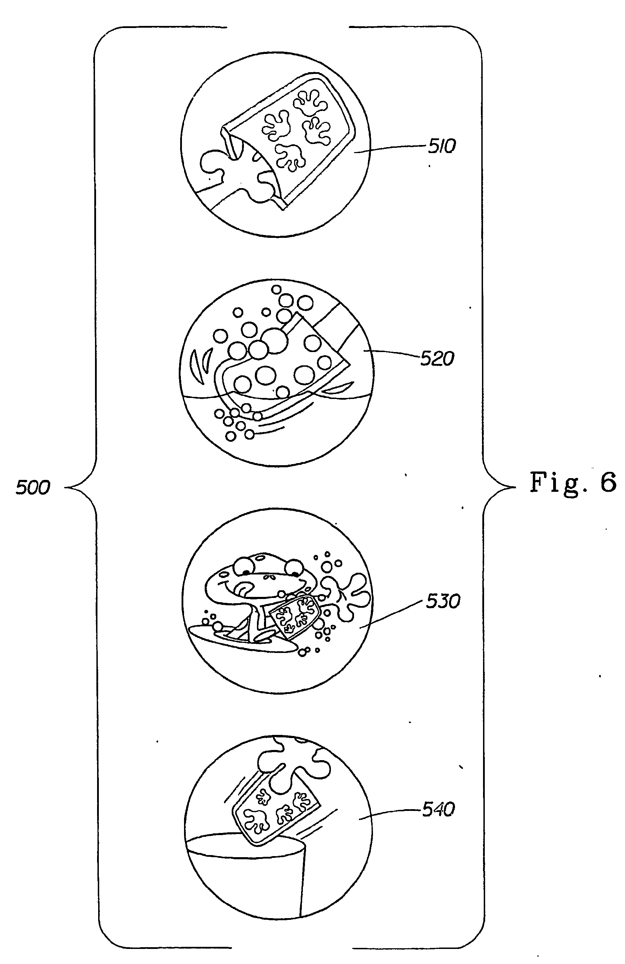

In an optional embodiment of the present invention, the set of visual prompts are a sequential series of panels, wherein each of the panels contains, for example, a different cartoon, symbol, drawing, photograph and combinations thereof. Each panel may contain one or more visual prompts. These panels may be arranged in any suitable fashion, such as but not limited to, vertically, horizontally, diagonally, circular, and the like and combinations thereof. Examples of this optional embodiment can be found in Figures 6, 7, 8 and 9.

In Figure 6 panels 500 are a set of visual prompts comprising a sequential series of panels communicating to a child incapable of reading how to use a disposable cleaning implement, in this case a child's cleansing mitt. Panel 510 communicates where the child places its hand to wear the mitt and the correct orientation of the child's cleansing mitt relative to the child. Panel 520 communicates not only that the child needs to contact the child's cleansing mitt with water, such as by immersion in a body of water such as a bath, but that the personal care composition will generate lather when combined with water. Panel 520 also communicates to the child that the personal care composition is only present on one side of the child's cleansing mitt. Additionally, panel 520 reinforces the prior communication in panel 510 on the correct orientation of the child's cleansing mitt relative to the child. Panel 530 reinforces the information communicated in previous panel 520 by again communicating that the personal care composition will generate lather and is only present on one side of the child's cleansing mitt. Panel 530 additionally communicates to the child that in order to clean themselves they need to contact, such as by rubbing, scrubbing and the like, their body with the side of the child's cleansing mitt which will generate lather. The frog cartoon character in panel 530 communicates to the child that the child's cleansing mitt is suitable for use while they are in a bath or similar body of water. Panel 540 communicates the need for the child to properly dispose of the child's cleansing mitt after they have finished bathing.

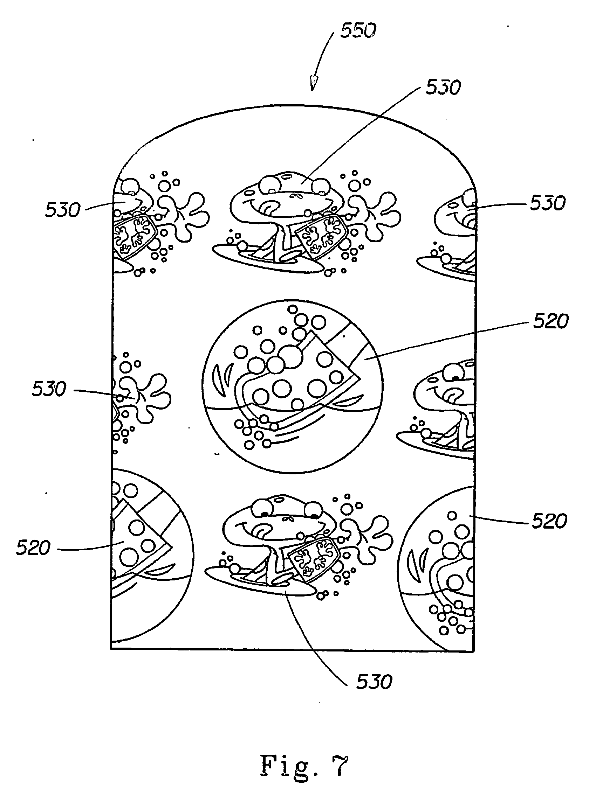

Figure 7 shows a child's cleansing mitt 550 containing a portion of the set of visual prompts of Figure 6, namely a repeating pattern of panels 520 and 530. Mitt 550 is typically used in combination with a container which has, for example, printed thereon the entire set, or only panels 510 and 540, of the set visual prompts of Figure 6. These panels on the mitt 550 would provide additional reinforcement to the child as to the correct use of the mitt 550.

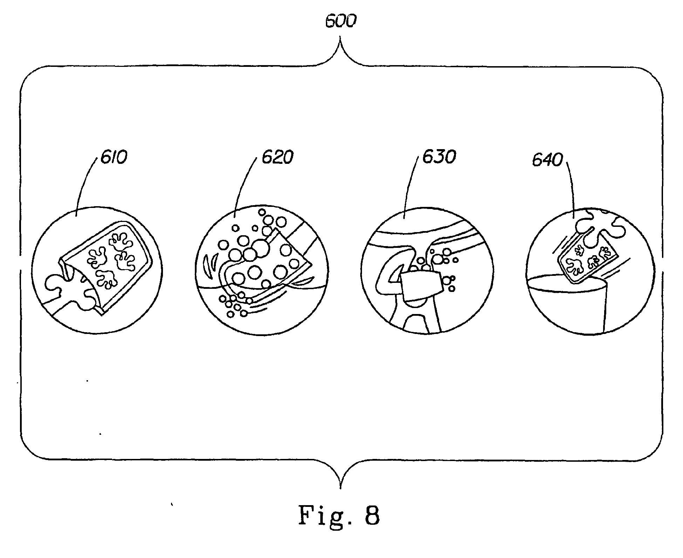

In Figure 8 panels 600 are a set of visual prompts comprising a sequential series of panels communicating to a child incapable of reading how to use a disposable cleaning implement, in this case a child's cleansing mitt. Panel 610 communicates where the child places its hand and the orientation of the child's cleansing mitt relative to the child. Panel 620 communicates that the child needs to contact the child's cleansing mitt with water, such as by immersion in a body of water such as a bath. Panel 620 also communicates to the child that the personal care composition is only present on one side of the child's cleansing mitt. Additionally, panel 620 reinforces the prior communication in panel 610 on the correct orientation of the child's cleansing mitt relative to the child. Panel 630 additionally communicates to the child that in order to clean themselves they need to contact, such as by rubbing, scrubbing and the like, their body with the side of the child's cleansing mitt which will generate lather. Additionally, panel 630 further reinforces the prior communication in panel 610 on the correct orientation of the child's cleansing mitt relative to the child. The frog cartoon character in panel 630 communicates to the child that the child's cleansing mitt is suitable for use while they are in a bath or similar body of water. Panel 640 communicates the need for the child to properly dispose of the child's cleansing mitt after they have finished bathing.

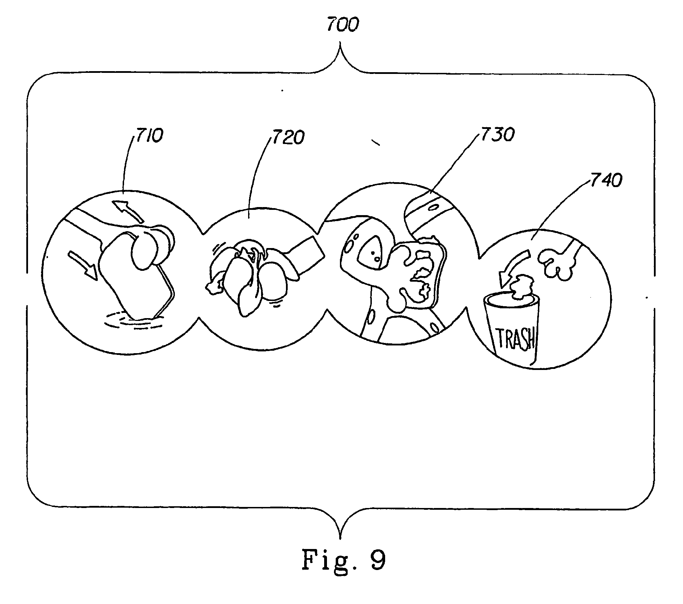

In Figure 9 panels 700 are a set of visual prompts comprising a sequential series of panels communicating to a child incapable of reading how to use a disposable cleaning implement. Panel 710 visually communicates that the child needs to contact the disposable cleaning implement with water, such as, by immersion in a body of water such as a bath. Panel 710 also visually communicates through arrows how a child immerses the disposable cleaning implement. Panel 720 visually communicates that the personal care composition will generate lather. Furthermore, panel 720 visually communicates through the use of a hand and motion lines, that the child needs to squeeze or exert some compressive force on the disposable cleaning implement after contact it with water to generate foam. The frog cartoon character in panel 730 communicates to the child that in order to clean themselves they need to contact, such as by rubbing, scrubbing and the like, their body with the disposable cleaning implement. Panel 730 further communicates to the child that the disposable cleaning implement is suitable for use on the child's entire body. Panel 740 communicates the need for the child to properly dispose of the disposable cleaning implement after they have finished bathing.

The set of visual prompts can also include a story line in which a character, such as the frogs of Figures 5 to 9, is illustrated performing an activity which will lead to the character needing to clean or bathe. Illustrative, but non limiting examples of such activities include, running, riding, playing in the mud, playing with a ball, playing hide and seek, or other similar activities which a child who is unable to read does and can relate to. In this way, the article of commerce may permit the caregiver to interact with the child regarding the story line created by the set of visual prompts and may provide an opportunity for the caregiver to teach the child important lessons regarding bathing and cleaning training due to the interactive nature of the article of commerce.

The set of visual prompts may optionally include a character graphic that can increase the child's interest in using the article of commerce and can increase the opportunities for the caregiver to interact positively with the child. The term "character graphic" is used herein to refer to a graphic containing an anthropomorphous image, and in particular an image having or suggesting human form or appearance which ascribes human motivations, characteristics or behavior to inanimate objects, animals, natural phenomena, toys, cartoon characters, or the like. Ideally the character graphic would be suitable for children's swimwear, toys, clothing, diapers or the like and could be utilized to motivate children to use the article of commerce. To that end, the character graphics can be associated with popular characters in the media, advertising or well known in a particular culture. Ideally they are characters that the child or caregiver care about and want to identify with. Ideally the child can imagine himself or herself taking the place of the character or emulate the character's behavior/attitude.

The role of the character graphic in the set of visual prompts can be to encourage a child and to motivate them to behaviors, such as cleaning themselves or other personal care. The character graphic may provide a source of entertainment and reassurance for the child and a buddy, or friend, who reduces stress and can be related to in a non-competitive fashion during the training period. The character may also provide positive reinforcement and encouragement to the child while the child is learning new skills and behaviors to clean themselves in a non-competitive or threatening manner.

Suitable character graphics can include animals, people, inanimate objects, natural phenomena, cartoon characters or the like, that can or can not be provided with human features such as arms, legs, facial features or the like. It may be desirable for the character graphic to be familiar to the child, such as an identifiable cartoon character. The character graphics should at least be a type that the child can relate to, examples of which could include animals, toys, licensed characters, or the like. Character graphics can be made more personable and friendly to the child by including human-like features, human-like expressions, apparel, abilities, or the like. In one optional embodiment it is desirable for a character to have a distinguishing feature or features, which in a pictograph can help in training, such as a frogs webbed hand. By way of illustration, an animal character graphic can be shown smiling, wearing clothing, playing sports, fishing, driving, playing with toys, or the like. In particular embodiments, the character graphic can desirably be created to project an appearance that could be described as friendly, positive, non-intimidating, silly, independent, inspirational, active, expressive, dauntless and/or persevering. For example, the frog 400 of Figure 5 is one example of such a character graphic and is intended to inspire the child to learn how to bathe and clean themselves. The frog's expression clearly shows that while he is concentrating on cleaning himself and becoming independent, he is still smiling and having fun. Additionally, it is preferred that the characters expressions are exaggerated so as to not be too subtle for a child to understand.

Furthermore the combination of story line graphics and character graphics are believed to make children more interested in the bathing process and therefore lead to enhanced results. While not wishing to be limited by theory it is believed that the three elements of the article of commerce work together to provide to a child who is incapable of reading the appropriate tools, directions in the use of those tools and positive reinforcement which enables the child to learn how to clean themselves.

In one optional embodiment the set of visual prompts may optionally include a character graphic which is associated with a line of children's consumer products, especially personal cleansing products and the like. The character may be one of a family, group, team, or the like, each member of which is designed to be associated with, for example, a consumer product, a cleaning event such as washing hair, an age group, stage of infant development and the like. Alternatively, all of the characters of a family, group, team, or the like, may be designed to be associated with the entire range of consumer products.

The association by the child of the character with the consumer product, cleaning event etc., encourages and provides a way for the child to visualize through their imagination the character using the consumer product in the way intended. Furthermore, since this teaching is through the use of the child's imagination, there are none of the negative connotations associated with conventional parental instruction on how to use a consumer product. Instead of the child being subjected to parental nagging to do something the child really doesn't want to do, the child will actively use the consumer product as part of active learning play to interact with their new buddy, or friend, and imitate behavior. The interaction between the child and the character is only limited by the bounds of the child's imagination. The role of the caregiver or parent in then becomes one of actively encouraging imaginative play by the child with the character to use the consumer product correctly, instead of a being perceived by the child as a parent who stops play. Play is actively encouraged and new skills become part of play; "uninterrupted play". Since the use of the product is essentially play, the child is eager to use the article of commerce and learn the skill.

A family or group of character graphics can be used to progress a child through a system of consumer products, especially personal cleansing products and the like. In this embodiment each character of the family or group, would be tailored to appeal to different groups of children. These groups may be based on age, development stages, regions, etc. Alternatively, a single character may be tailored for one particular group consumer products of line of consumer products which are different for children at different ages, development stages, etc. In this case the character may, for example be, of a different age depending on the consumer product and which group of children the product is intended to be used by.

The set of visual prompts act to enable and encourage the desired behavior, such as the correct use of the cleaning implement, by providing stimuli. In the case of a set of visual prompts containing a character the stimuli is entertainment and a friend.

### Method for Teaching a Child to Clean Themselves

The present invention also includes within its scope a method for teaching a child who is incapable of reading to clean themselves. The method includes the step of supplying the child with an article of commerce as described herein. The method of the present invention may also include additional method steps, such as but not limited to, providing the child with a source of water, providing the child with a wash basin, providing the child with a bath tub, placing the child in a bath tub, directing the child to get into a bath tub, and combinations thereof.

While not wishing to be limited by theory it is believed that the three elements of the article of commerce, work together to provide to a child who is incapable of reading, the appropriate tools, directions in the use of those tools and positive reinforcement which enables the child to learn how to clean themselves.

### EXAMPLES

Example 1 - An article of commerce comprising:
(a) container as described in US Patent Application Publication No. 2002/0064323, published on May 30. 2002, inventor Chin;
(b) a cleaning implement which is a 105mm x 140mm rectangle comprising 60 gsm polyester nonwoven high loft batting material, Proef 1297 available from Libeltex of Meulebeke Belgium. The high loft batting material is releasably carrying the personal care composition, which is 50 gsm of BC20, available from Rhodia of France; and
(c) a set of visual prompts as illustrated in Figure 5.
Example 2 - An article of commerce according to Example 1, except that the set of visual instructions are those illustrated in Figure 9.
Example 3 - An article of commerce according to Example 1, except that the cleaning implement is a two-layer laminate. The first layer of the laminate is a 40gsm PET spunlace. While the second layer of the laminate is a 60 gsm polyester nonwoven high loft batting material, Proef 1297 available from Libeltex of Moulebeke Belgium. The high loft batting material is releasably carrying the personal care composition, which is 25 gsm of BC20, available from Rhodia of France.
Example 4 - An article of commerce according to Example 1, except that the container (a) is described in U.S. Patent No. Des. 421,901 issued March 28, 2000, to Hill.
Example 5 - A article of commerce comprising:
(a) container as described in US Patent Application Publication No. 2002/0064323, published on May 30, 2002, inventor Chin;
(b) a cleaning implement which is a mitt and comprising a first member which is a 60 gsm polyester nonwoven high loft batting material, Proef 1297 available from Libeltex of Meulebeke Belgium, and a second member which is a three member laminate. The three member laminate contains a 90 gsm two layer stretch laminate, namely 259-50-3 available from Tredegar, of Richmond, Virginia U.S.A.. and a 30 gsm nonwoven 008YLCO09U, available from BBA of Nashville Tennessee, U.S.A. The high loft batting material is releasably carrying the personal care composition, which is 85 gsm of BC20. available from Rhodia of France; and
(c) a set of visual prompts as illustrated in Figure 6.
Example 6 - An article of commerce according to Example 5, except that the set of visual instructions are those illustrated in Figure 8.
Example 7 - An article of commerce according to Example 5, except that the child's cleansing mitt is the cleansing mitt of co filed application filed on March 10, 2003. entitled "Disposable Nonwoven Cleansing Mitt" in the name of Benjamin et al. published as WO 2004/080256, (P&G Docket Number 9180PQ).

## Claims

1. An article of commerce, said article comprising:
(a) a container (90), said container (90) housing;
(b) at least one disposable cleaning implement (10), said cleaning implement (10) releasably carrying a personal care composition (195); **characterized in that** said article of commerce (90) further comprises
(c) a set of visual prompts in association with said article, said set of visual prompts comprising instruction on washing of a child by said child with said cleaning implement, said set of visual prompts being of a form which are capable of being understood and followed by said child when said child is incapable of reading and wherein said set of visual prompts is in the form of photographs, drawings, cartoons, symbols and combinations thereof.

2. An article of commerce according to Claim 1, wherein at least a portion of said set of visual prompts is on said cleaning implement (10).

3. An article of commerce according to Claim 1 wherein the at least one disposable cleaning implement (10) comprises a nonwoven child's cleansing mitt (110).

4. An article of commerce according to any one of Claims 1 to 3, wherein said set of visual prompts is a sequential series of panels, wherein each of said panels contains a different cartoon.

5. An article of commerce according to any one of Claims 1 to 4, wherein at least a portion of said set of visual prompts is on said container (90).

6. An article of commerce according to Claim 3 wherein at least a portion of said set of visual prompts is on said nonwoven child's cleansing mitt (110).

7. An article of commerce according to any one of Claims 3 or 6, wherein said set of visual prompts further comprises instruction on lathering of said nonwoven child's cleansing mitt (110) by said child prior to and during washing of said child by said child and disposal of said nonwoven child's cleansing mitt (110) by said child after washing of said child by said child.

8. A method for teaching a child who is incapable of reading to clean themselves comprising:
supplying said child with an article of commerce, said article comprising:
(A) a container (90), said container housing;
(B) at least one disposable cleaning implement (10), said cleaning implement releasably carrying a personal care composition (95); and
(C) a set of visual prompts in association with said article, said set of visual prompts comprising instruction on washing of a child by said child with said cleaning implement, said set of visual prompts being of a form which is capable of being understood and followed by said child when said child is incapable of reading, and wherein said set of visual prompts is in the form of photographs, drawings, cartoons, symbols and combinations thereof.

9. The method according to Claim 8, wherein said at least one disposable cleaning implement (10) comprises a nonwoven child's cleansing mitt (110).

## Patentansprüche

1. Handelsartikel, wobei der Artikel Folgendes umfasst:
(a) einen Behälter (90), wobei in dem Behälter (90) folgendes untergebracht ist:
(b) mindestens eine Einweg-Reinigungsvorrichtung (10), wobei die Reinigungsvorrichtung (10) eine Körperpflegezusammensetzung (195) trägt, die von ihr abgegeben werden kann; **dadurch gekennzeichnet, dass** der Handelsartikel (90) Folgendes umfasst
(c) einen Satz visueller Hinweise in Verbindung mit dem Artikel, wobei der Satz visueller Hinweise eine Anleitung zum Waschen eines Kindes mit der Reinigungsvorrichtung umfasst, wobei der Satz visueller Hinweise in einer Form vorliegt, die von dem Kind verstanden und befolgt werden kann, wenn das Kind nicht lesen kann, und wobei der Satz visueller Hinweise in der Form von Fotos, Zeichnungen, Cartoons, Symbolen und Kombinationen davon vorliegt.

2. Handelsartikel nach Anspruch 1, wobei mindestens ein Teil des Satzes visueller Hinweise sich auf der Reinigungsvorrichtung (10) befindet.

3. Handelsartikel nach Anspruch 1, wobei die mindestens eine Einweg-Reinigungsvorrichtung (10) einen Kinderreinigungshandschuh (110) aus Vliesstoff umfasst.

4. Handelsartikel nach einem der Ansprüche 1 bis 3, wobei der Satz visueller Hinweise eine sequenzielle Reihe von Feldern ist, wobei jedes der Felder einen anderen Cartoon enthält.

5. Handelsartikel nach einem der Ansprüche 1 bis 4, wobei mindestens ein Teil des Satzes visueller Hinweise sich auf dem Behälter (90) befindet.

6. Handelsartikel nach Anspruch 3, wobei mindestens ein Teil des Satzes visueller Hinweise auf dem Kinderreinigungshandschuh (110) aus Vliesstoff ist.

7. Handelsartikel nach einem der Ansprüche 3 oder 6, wobei der Satz visueller Hinweise ferner eine Anleitung zum Einschäumen des Kinderreinigungshandschuhs (110) aus Vliesstoff durch das Kind vor dem und beim Waschen des Kindes durch das Kind und zur Entsorgung des Kinderreinigungshandschuhs (110) aus Vliesstoff durch das Kind nach dem Waschen des Kindes durch das Kind umfasst.

8. Verfahren zum Lehren eines Kindes, das nicht lesen kann, sich zu reinigen, umfassend:
Versorgung des Kindes mit einem Handelsartikel, wobei der Artikel Folgendes umfasst:
(a) einen Behälter (90), wobei in dem Behälter Folgendes untergebracht ist:
(b) mindestens eine Einweg-Reinigungsvorrichtung (10), wobei die Reinigungsvorrichtung eine Körperpflegezusammensetzung (195) trägt, die von ihr abgegeben werden kann; und
(c) einen Satz visueller Hinweise in Verbindung mit dem Artikel, wobei der Satz visueller Hinweise eine Anleitung zum Waschen eines Kindes durch das Kind mit der Reinigungsvorrichtung umfasst, wobei der Satz visueller Hinweise in einer Form vorliegt, die von dem Kind verstanden und befolgt werden kann, wenn das Kind nicht lesen kann, und wobei der Satz visueller Hinweise in der Form von Fotos, Zeichnungen, Cartoons, Symbolen und Kombinationen davon vorliegt.

9. Verfahren nach Anspruch 8, wobei die mindestens eine Einweg-Reinigungsvorrichtung (10) einen Kinderreinigungshandschuh (110) aus Vliesstoff umfasst.

## Revendications

1. Article du commerce, ledit article comprenant :
(a) un conteneur (90), ledit conteneur (90) contenant ;
(b) au moins un ustensile de nettoyage jetable (10), ledit ustensile de nettoyage (10) renfermant de façon libérable une composition de soin personnel (195) ; **caractérisé en ce que** ledit article du commerce (90) comprend, en outre,
(c) une série de signaux visuels combinés avec ledit article, ladite série de signaux visuels comprenant l'instruction de lavage d'un enfant par ledit enfant avec ledit ustensile de nettoyage, ladite série de signaux visuels étant sous une forme qui est susceptible d'être comprise et suivie par ledit enfant lorsque ledit enfant est inapte à lire, et dans lequel ladite série de signaux visuels est sous la forme de photographies, dessins, bandes dessinées, symboles et leurs combinaisons.

2. Article du commerce selon la revendication 1, dans lequel au moins une partie de ladite série de signaux visuels est sur ledit ustensile de nettoyage (10).

3. Article du commerce selon la revendication 1, dans lequel l'ustensile de nettoyage jetable (10) au moins unique comprend une moufle de nettoyage de l'enfant non tissée (110).

4. Article du commerce selon l'une quelconque des revendications 1 à 3, dans lequel ladite série de signaux visuels est une série séquentielle de panneaux, dans lequel chacun desdits panneaux contient une bande dessinée différente.

5. Article du commerce selon l'une quelconque des revendications 1 à 4, dans lequel au moins une partie de ladite série de signaux visuels est sur ledit conteneur (90).

6. Article du commerce selon la revendication 3, dans lequel au moins une partie de ladite série de signaux visuels est sur ladite moufle de nettoyage de l'enfant non tissée (110).

7. Article du commerce selon l'une quelconque des revendications 3 ou 6, dans lequel ladite série de signaux visuels comprend, en outre, une instruction visant à faire mousser sur ladite moufle de nettoyage de l'enfant non tissée (110) par ledit enfant avant et pendant le lavage dudit enfant par ledit enfant et la mise au rebut de ladite moufle de nettoyage de l'enfant non tissée (110) par ledit enfant après le lavage dudit enfant par ledit enfant.

8. Procédé pour apprendre à un enfant qui est inapte à lire à se nettoyer lui-même comprenant :
la fourniture audit enfant d'un article du commerce, ledit article comprenant :
(A) un conteneur (90), ledit conteneur contenant ;
(B) au moins un ustensile de nettoyage jetable (10), ledit ustensile de nettoyage renfermant de façon libérable une composition de soin personnel (195) ; et
(C) une série de signaux visuels combinés avec ledit article, ladite série de signaux visuels comprenant l'instruction de lavage d'un enfant par ledit enfant avec ledit ustensile de nettoyage, ladite série de signaux visuels étant sous une forme qui est susceptible d'être comprise et suivie par ledit enfant lorsque ledit enfant est inapte à lire, et dans lequel ladite série de signaux visuels est sous la forme de photographies, dessins, bandes dessinées, symboles et leurs combinaisons.

9. Procédé selon la revendication 8, dans lequel ledit au moins un ustensile de nettoyage jetable (10) comprend une moufle de nettoyage de l'enfant non tissée (110).
